# EUROPEAN PATENT SPECIFICATION

(11) **EP 2 097 591 B1**
(45) Date of publication and mention of the grant of the patent: **04.07.2012**
(21) Application number: 07858893.6
(22) Date of filing: 23.11.2007
(51) Int. Cl.: E04B 1/343

(54) **Structure with extruded profiles and the assembly method thereof, for the industrial production of pre-fabricated housing modules**
Struktur mit extrudierten Profilen und zugehöriges Montageverfahren für die industrielle Herstellung von Fertigbauteilen für den Hausbau
Profils extrudés à section complexe et système d'assemblage de ceux-ci, pour la production industrielle de modules de logements préfabriqués

(30) Priority: 24.11.2006 IT PN20060095
(43) Date of publication of application: 09.09.2009
(73) Proprietor: Trimed-Pro SRL, 33170 Pordenone (IT); Travan, Franco Maria Leone, 39100 Bolzano (IT)
(72) Inventor: TRAVAN, Franco Maria Leone, 39100 Bolzano (IT)
(74) Representative: Petraz, Gilberto Luigi
(86) International application number: PCT/IB2007/003598
(87) International publication number: WO 2008/062297

(56) References cited:
- WO-A-02/02883
- WO-A-2006/082227
- DE-A1- 3 203 366
- DE-U1- 8 801 936
- DE-U1- 9 215 775

## Description

### FIELD OF THE INVENTION

The present invention concerns extruded profiles or artifacts with an articulated and complex section, the main objects of the present invention, which have their main application with the objects disclosed in the international patent application PCT/EP2006/050634 in the name of the present Applicants, in order to achieve modular structures for pre-fabricated housing modules. In particular, the sections of said extrusion artifacts, in the complexity of their specific shape, are designed according to the specific functions for which those artifacts are intended, in that particular construction system.

### BACKGROUND OF THE INVENTION

Artifacts are known, as described in the international patent application PCT/EP2006/050634 in the name of the present Applicants, or in DE 3203366 A1. These are metal pre-fabricated pieces of a particular type, the elementary components of which are products made starting from standard profiles with the workings typical of metal-work (shearing, welding etc). The complexity of the final products to be made (which complexity is due to the plurality and articulation of the functions which the artifacts themselves must fulfill) entails a production cycle consisting of a very high number of elementary operations, each of which is extremely simple individually but, as we said, of an extremely high number. Consequently, in the final cost of the artifact produced, the cost of the labor has a very big effect, as happens in all those artifacts that are produced by artisans and such is the artifact in the above patent application.

The construction of known artifacts has the disadvantage of the dichotomy between a product of metal-work, generally applied to large artifacts, and on the contrary the small size that the components of the artifact in question have to have so that they respect the technical specifications of lightness and hand-transportability typical of said artifacts. In substance the elementary workings typical of metal-work must be applied here to artifacts of small size, under operating conditions that are extremely inconvenient and awkward which significantly influence the real costs of the workings and the general work in its entirety. In this context the main technical problem to be solved is the elimination of the greatest possible number of workings in the plant (and certainly the elimination of complex and inconvenient workings) replacing them by a work of planning (object of the present invention) which allows to produce, in a simple continuous extrusion cycle, basic products whose complex form is justified since they already contain those characteristics that otherwise would have to be achieved using those complicated and costly workings that it was planned to avoid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

The present invention, in order to define an effective plan to industrialize production, is based on two autonomous and inter-connected principles. The first is to assume as the basic material for construction, not standard metal profiles but extruded profiles with a complex section and particular sizes, studied and designed for this particular field of application (the complex-section profiles which are the object of the present invention). The second principle to optimize the production system consists in the drastic reduction of workings and treatments to be carried out in the factory, and that is closely connected with the particular shape of the basic profiles and the simplifications in the workings that said particular shape allows.

In accordance with the above purposes, the present invention consists first of all in designing profiles to be made with the extrusion technique and having a complex section such as to solve specific problems of static resistance and to perform an articulated series of additional functions connected to the pre-fabricated modules for which they are intended. The design is specifically intended for the construction of the specific molds which will be used for the extrusion of the profiles and therefore satisfies not only the static and functional requirements dictated by the specific use, but also the requirements and limitations imposed by the technique of constructing extrusion molds and also by the extrusion process itself. Closely connected to the particular shape of the profiles there is also the particular sequence of elementary operations that allow to produce the final artifact, as in the international patent application n. PCT/EP2006/050634 in the name of the present Applicants, on an industrial, not artisan scale. The particular production model is closely connected to the shape of the basic profiles and therefore, like the shape of the extruded pieces, is also the object of the present invention. The shape of the extruded pieces and the connected working cycles constitute a design and intellectual activity totally original and autonomous which is applied to a particular and specific product like the one protected by said international patent application n. PCT/EP2006/050634. The innovative character of the design according to the present invention is further stressed by the fact that the artifact made with these newly invented profiles and connected workings is a significant improvement, from the point of view of technique, quality and aesthetics compared to the artifact described in the previous patent application. Therefore, if the present invention can be considered an autonomous and original innovation applied to the products protected by the previous patent application, it must also be considered that, from this synergic application of new technologies to an existing product, a new product is born, an evolution of the previous one, with improved and totally superior technical and aesthetic characteristics. The elements that make up the present invention can be described in more detail as follows.

Firstly, we have a design of the profile with a square section (column-profile) used for the bearing columns, a single type, which make up the whole structure. The profile has an area section such as to support the static and accidental loads induced by the whole structure and also has to perform the following additional functions: the profile must also contain suitable free spaces to allow the movement of the clamping hooks of the bearing frames to the column, suitable guides to allow the insertion and attachment on each side of the bars containing the pins on which the clamping hooks work, and finally, suitable guides for the insertion and attachment of packings (of standard commercial shape and sizes) able to guarantee the seal between the column and the bearing frames connected therewith. The column profile, due to its shape, must also allow the insertion of the foot at a variable height of the column and must contain the seatings in which the clamping screws of the foot of the column to the column are inserted. Apart from tightening the four screws that clamp the column to its foot, the only other workings to be made to the column are the already mentioned insertion of the packings and bars with the pins for the hooks, and the cutting of notches to be made at the top of the column to allow the insertion of the roof profile therein.

Secondly we have a design of the profile with a rectangular section (frame-profile) used to make each of the four sides of which all the bearing frames (both solid and hollow) of the pre-fabricated modules consist. The profile can be produced both in the open version and also in the closed version. The profile has an area section and a distribution of the mass such as to support the static and accidental loads induced by the whole structure and also has to perform the following additional functions: the profile, in its use as an upper cross-beam of all the frames, must perform the function of a support for the roof and a gutter for rain water falling on the roofs of the pre-fabricated structure, whereas, in its use as a lower cross-beam of all the frames, it must perform the function of a support for the floors. In its use as vertical uprights of all the frames, the profile has to provide guides for the insertion of the hook-bearing bar and the other guides for clamping the hooks. Used for vertical uprights, the profile must also perform the function of downspout for discharging the rainwater to earth. Finally, the frame-profile, for any of the positions in which it can be used, must provide the seating for the insertion of the buffer panels. From the continuous extrusion bar, at appropriate distances with straight or oblique cuts, the four components of all the frames are obtained directly; they will then be inter-connected with each other by screwing to the edges particular clamping L-bars which are inserted inside the profile. With said clamping operation of the four parts of the frames, given the particular shape of the profile, the buffer panels are also automatically clamped. According to the particular new extruded profiles, the clamping profiles of the roof are also partly modified: they become simpler, it being possible to use, as a clamping system to the frame, the same guide that in the vertical profiles serves to clamp the hooks and in the upper horizontal roof-support cross-beam functions precisely as an attachment for the sliding profiles that clamp the roof. The above extrusions (with respect to a traditional metal-work on standard profiles) entail a decidedly greater accuracy of the sizes of all the components, with a drastic reduction of all the tolerances due to possible margins of error in working. Consequently, the level of accuracy of all the connections between the various components of the pre-fabricated module increases, with a consequent increase in the level of sealing and insulation of the whole structure. This greater accuracy in the whole structure of the pre-fabricated modules makes it possible to carry out significant simplifications in some components such as, in particular, the covering panels that can be transformed into a simple insulated panel which, on the side where the two roof panels meet, has a finishing with a simple profile which creates the seating where the sealing packing of the roof is fitted, whereas on the remaining three sides of the covering panels (sides which rest on the upper horizontal cross-beams of the bearing frames) the finishing can be a slightly shaped profile which also directly functions as a drip that is positioned inside the gutters (inside the frame-profile used as an upper horizontal cross-beam of the bearing frames).

The introduction of the particular extruded profiles according to the present invention radically modifies the production cycle of the pre-fabricated modules according to the previous patent application PCT/EP2006/050634. In fact, the extruded profiles, thanks to the particular nature of their shape and the studied geometry of their section, are already nearly finished elements on which only extremely limited, both in quantity and in entity, working interventions have to be made, and in substance they are assembled using simple clamping screws. To be able to start from profiles with a complex section, like those described here, which exit from the extrusion process as almost complete and finished elements, entails a drastic reduction in all the workings in the plant with, on the one hand, a significant economic advantage and, on the other hand, with the possibility of abandoning an artisan-type production cycle (connected to the previous patent application), and to transform it into an industrial process based on serial assembly operations with the connected advantages of reducing the production times of a single artifact and a substantial increase in production capacity, given the same work force used. Apart from the substantial advantages of reducing construction times and costs and increasing production capacity, as above, it must also be stressed that the artifact made according to the functional characteristics of the previous patent application PCT/EP2006/050634, but with the introduction of the technological innovations according to the present invention, has technical, quality and also aesthetic characteristics decidedly higher than that of the artifact made without the innovations of the present invention. It is certainly a technical advantage, for example, to optimize the sections of the profiles and to redistribute the masses inside the profile according to the static conditions in which the profiles operate. It is certainly a quality advantage, for example, the greater precision with which all the components of the pre-fabrication system can be made, with a consequent increase in the level of sealing and insulation of the whole structure. It is certainly an aesthetic advantage, for example, that by using the technological innovations according to the present invention all the welding operations have been eliminated from the production cycle in the factory, and this allows to assemble components of different materials and also pre-painted components, or with painting methods that are qualitatively and aesthetically better.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a section reproducible in an extrusion mold for the column-profile;
- fig. 2 shows a section reproducible in an extrusion mold for the frame-profile;
- fig. 3 shows a section of a column-profile;
- fig. 4 shows a bearing column of the whole pre-fabricated structure;
- fig. 5 is an enlarged detail of fig. 4;
- fig. 6 is a three-dimensional view of the column in fig. 4;
- fig. 7 shows the foot of the column in fig. 6;
- fig. 8 is a section of the frame-profile, usable as a vertical upright of all the frames;
- fig. 9 is an internal view of the frame-profile in fig. 8;
- fig. 10 is an external view of the frame-profile in fig. 8;
- fig. 11 is a lateral view of the frame-profile in fig. 8;
- fig. 12 is an enlarged detail of fig. 8;
- fig. 13 is a three-dimensional view of the frame-profile in fig. 8;
- fig. 14 is a section of a frame-profile usable as an upper horizontal cross-beam for all the frames;
- fig. 15 is a view from below of the frame-profile in fig. 14;
- fig. 16 is a lateral view of the frame-profile in fig. 14;
- fig. 17 is an enlarged detail of fig. 14;
- fig. 18 is a three-dimensional view of the frame-profile in fig. 14;
- fig. 19 is an enlarged detail of fig. 18;
- fig. 20 is a section of a frame-profile usable as a lower horizontal cross-beam for all the frames;
- fig. 21 is a view from above of the frame-profile in fig. 20;
- fig. 22 is a view from below of the frame-profile in fig. 20;
- fig. 23 is a lateral view of the frame-profile in fig. 20;
- fig. 24 is an enlarged detail of fig. 21;
- fig. 25 is a three-dimensional view of the frame-profile in fig. 20;
- fig. 26 is an enlarged detail of fig. 22;
- fig. 27 is a three-dimensional view of the bearing frame in separate parts;
- fig. 28 is a three-dimensional detail of the section of the vertical upright in correspondence with the clamping hook frame-column;
- fig. 29 is a schematic representation of a clamping hook;
- fig. 30 is a detail of the frame-profile used as upper cross-beam of the bearing frame;
- fig. 31 is a detail of a variant of the frame-profile used as upper cross-beam of the bearing frame;
- fig. 32 is a planimetric detail of the attachment of two contiguous bearing frames to the same pillar;
- fig. 33 shows a packing that can be put between two half-roofs;
- fig. 34 shows clamping systems to attach a bipartite roof to a bearing structure below;
- fig. 35 is a variant of a frame-profile;
- fig. 36 is a three-dimensional view in separate parts of a modular structure that uses frame-profiles according to the present invention.

### DETAILED DESCRIPTION OF A PREFERENTIAL FORM OF EMBODIMENT

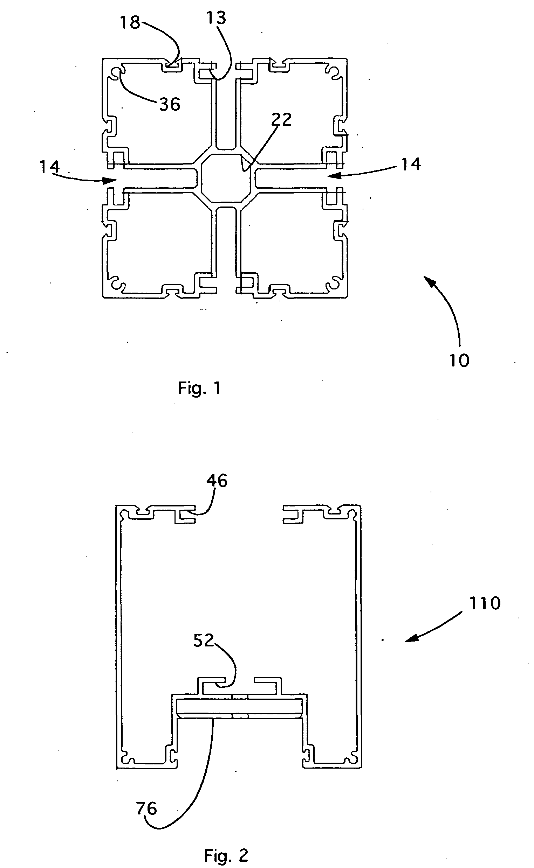

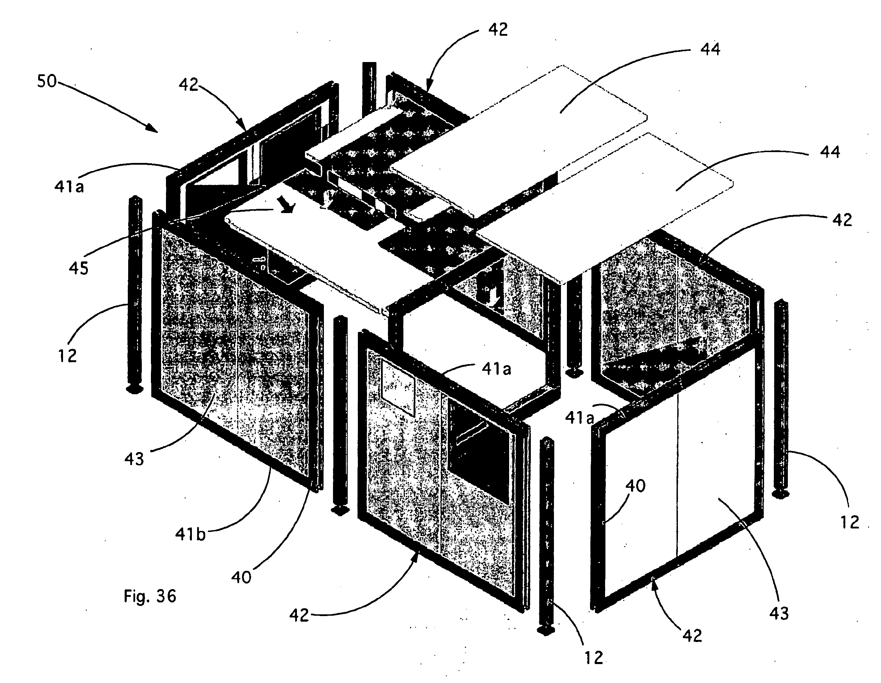

With reference to figs. 1 and 2, sections are shown of the profiles to be produced by extrusion according to the present invention. The present invention is applied both to column-profiles 10 and also to frame-profiles 110, made by means of extrusion and used to make modular structures 50 of the housing type, as shown in fig. 36, and consisting of bearing columns 12, bearing frames or wall frames 42 that carry wall panels 43, covering panels or roof 44, and flooring panels or floor 45. In particular, the column-profile 10, suitably sectioned, is used to make the bearing columns 12, whereas the frame-profile 110 is used to make upper cross-beams 41a and lower cross-beams 41 b and vertical uprights 40 that define each wall frame 42.

Fig. 1 shows a section reproducible in an extrusion mold for a column-profile 10. The column-profile 10 is of an almost square general shape, it has the same characteristics on its four sides, so as to allow the wall frames 42 to be attached without distinction on any of the four sides of the column-profile 10, without fixed or pre-determined positions. The closed section of the column-profile 10 enhances its resistance to compression loads and rotation loads to which it is subjected, used as bearing columns 12 of the whole modular structure 50.

Fig. 2 shows a section reproducible in an extrusion mold for a frame-profile 110. The frame-profile 110 is shown here in its basic form with an open section. The different uses of the same frame-profile 110, in the construction of the different components in which it is used, are clarified hereafter in the description.

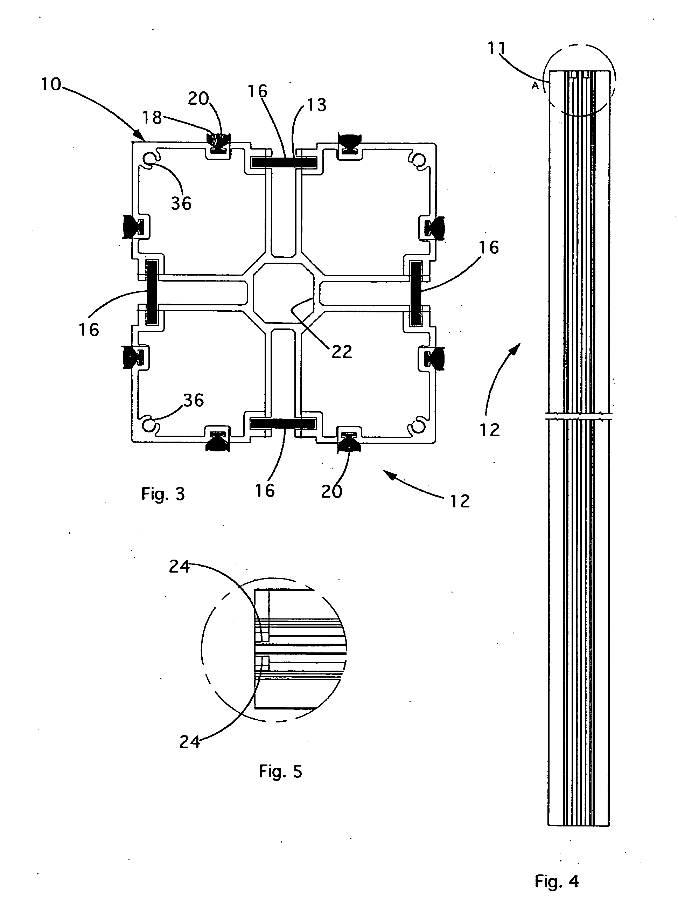

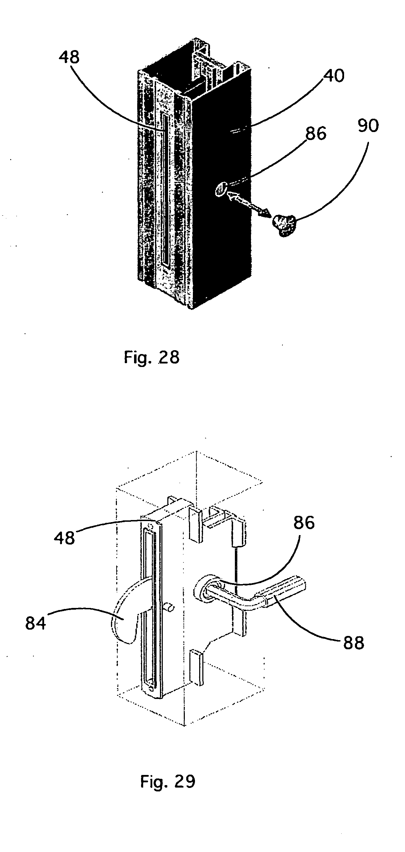

In particular, the column-profile 10 can be used in the construction of the bearing pillars or columns 12 (fig. 3) on which the whole structure 50 rests. The column-profile 10, in its use as a bearing column 12, has symmetrically on each of its four sides suitable free spaces 14 to allow the movement of clamping hooks 84 (fig. 29) to clamp the bearing frames 42 to the bearing column 12. Suitable guides 13 are shown, to allow the insertion and attachment on each side of bars 16 provided with pins on which the clamping hooks 84 work, and also suitable guides 18 for the insertion and attachment of packings 20 (of standard commercial shape and size) able to guarantee the seal between the column 12 and the bearing frames 42 connected therewith.

The whole bearing column 12 (fig. 4) of the whole pre-fabricated structure 50, of which a single type is produced, is made simply by cutting perpendicularly, at a suitable distance, the continuous extrusion of the column-profile 10.

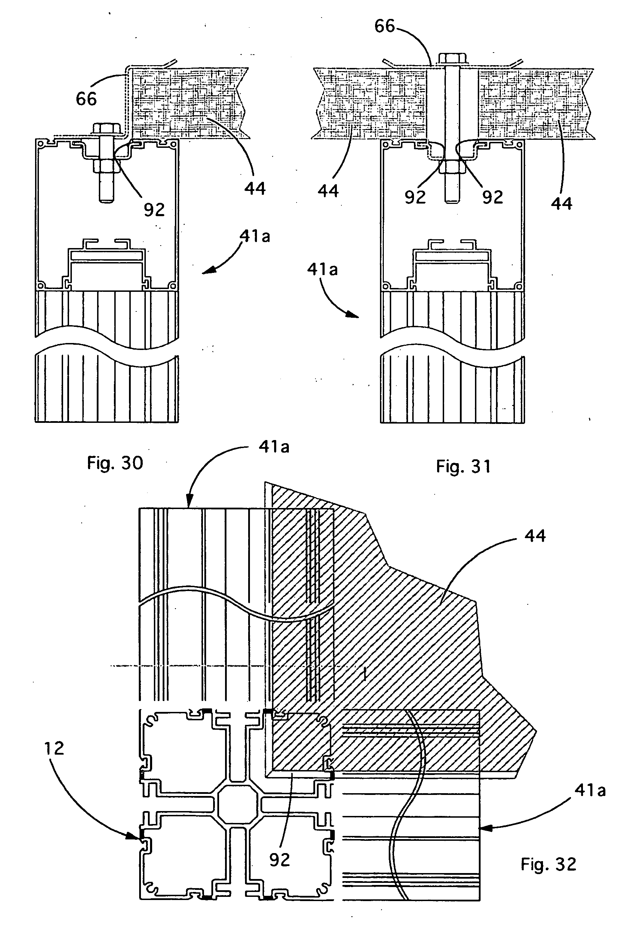

Other workings to be made on the extruded profile (fig. 5), to make the production cycle complete, consist simply in cutting notches 24 at the top 11 of the bearing column 12, to allow the insertion into the notches of the roof profile 44 and, in this case, the drip 92 with which the edge profile of the roof 44 ends (fig. 32).

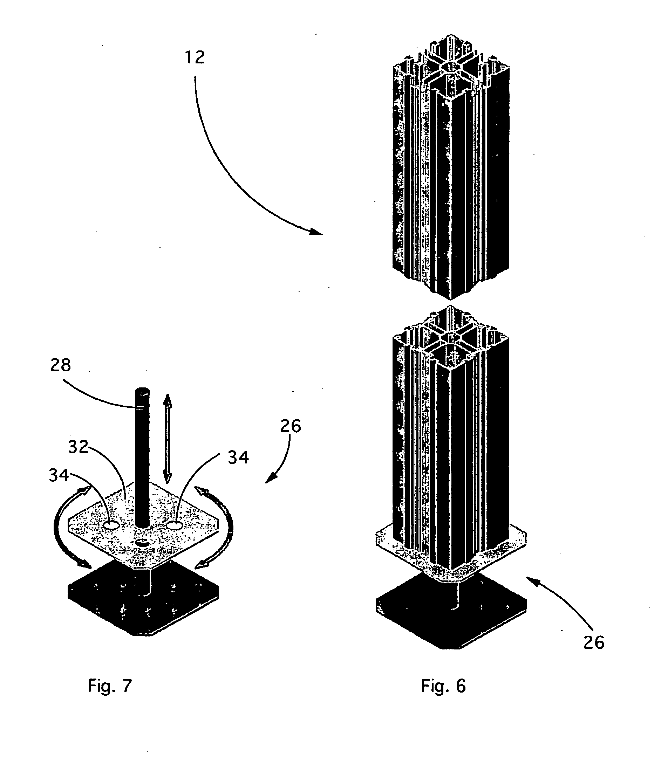

The completed and finished bearing column 12 (fig. 6) comprises a foot 26 adjustable in height (fig. 7), and also the bars 13 with the pins on which the clamping hooks 84 (coupling seats for hooks) work and the continuous packings 20.

In particular, the foot 26 of the column 12 comprises a central threaded pin 28 and a counter-bolt that allow a millimetric adjustment in height. The type of foot 26 of the column 12 corresponds to that already provided in the international patent application PCT/EP2006/050634 in the name of the present Applicants. The column-profile 10, due to its shape, also allows to insert, into its central part 22, the pin 28 that adjusts the foot 26 to a variable height of the column 12 and provides seatings 36 into which the self-threading clamping screws are inserted, to clamp the foot 26 to the relative column 12. A plate 32 connects the foot 26 to the column 12 and includes holes 34 to house four attachment screws to which the holes 36 already present in the column-profile 10 correspond, as it exits from the extrusion process.

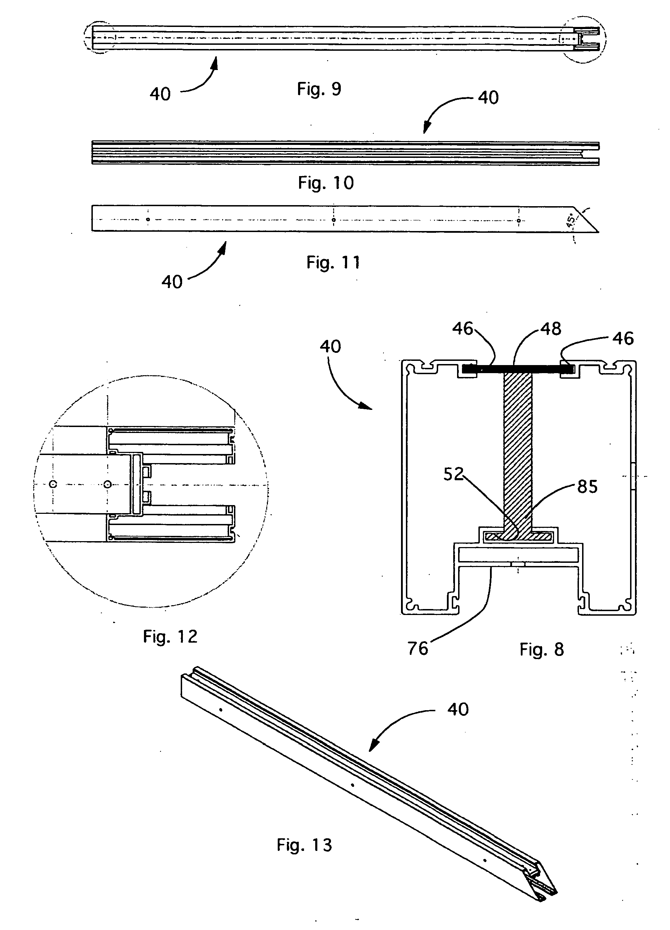

Fig. 8 shows the frame-profile 110 used in the construction of the vertical uprights 40 of all the frames 42 both hollow and solid with further workings to be made so as to make the production cycle complete.

The frame-profile 110, in its use as a vertical upright 40, provides first guides 46 inside which a bar 48 slides, which carries the clamping hooks 84 and also provides second guides 52 to further clamp the hooks 84. In fig. 8 a bar 48 and hooks 84 are visible, and their positioning with respect to the frame-profile 110 with which the uprights 40 are made.

From the internal view (fig. 9) and the external view (fig. 10) of the frame-profile 110 it can be seen how the upright 40 is made by cutting the continuous extrusion profile at a suitable distance. On the element thus produced only limited other workings are then made.

From the lateral view (fig. 11) of the frame-profile 110 it can be seen how the upright 40 is made by cutting the continuous extrusion profile the first time at 90° and, at a suitable distance, a second time at 45°. On the element thus produced holes 86 are made, to allow the passage of an Allen screw 88 which drives the clamping hooks 84 between the frame 42 and the column 12 (fig. 29).

In particular, the lower portion 54 of the vertical upright 40 (part cut at 45°) includes holes 56 which function as seatings for the screws that clamp the vertical upright 40 to the lower horizontal cross-beam 41b with an L-shaped clamping bracket, screwed to said two elements and inserted retracted into the profile (fig. 12).

As can also be seen in fig. 13, the vertical upright 40 of the frames 42 is made by means of simple cuts to the continuous extruded piece, making only limited and simple finishing works.

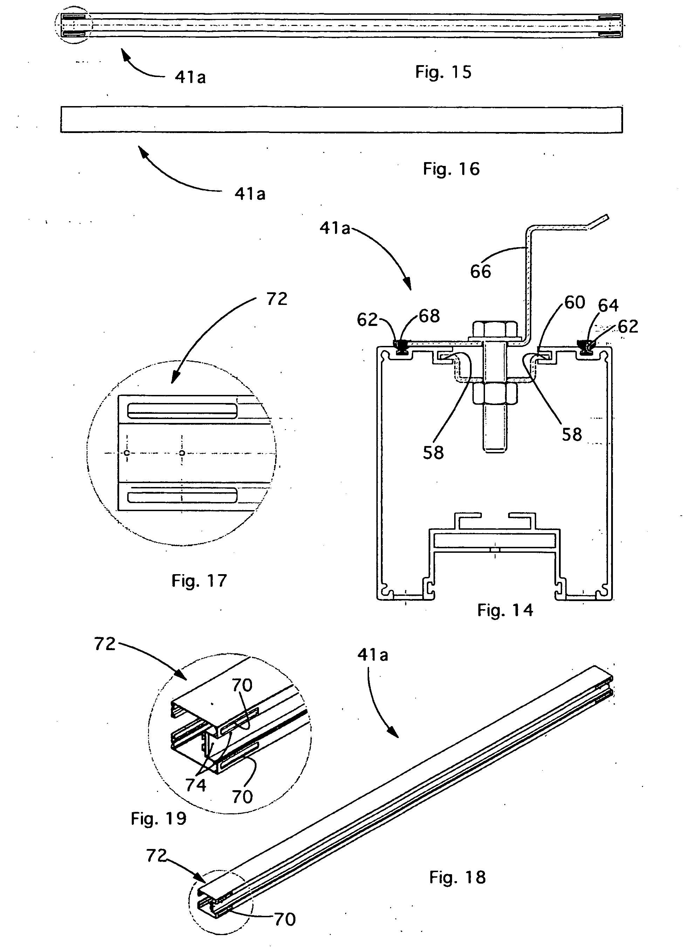

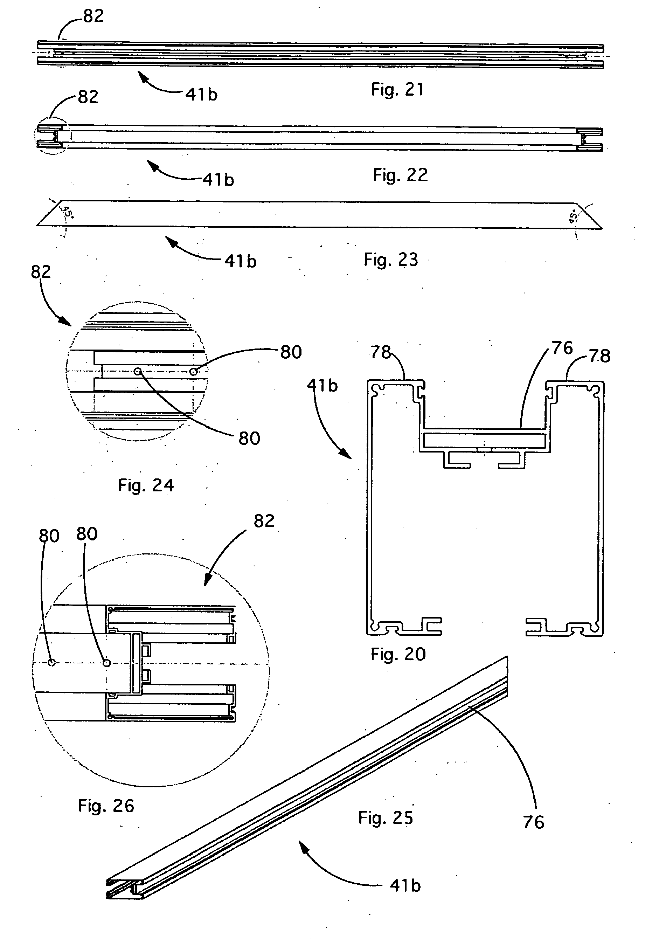

As we said, the frame-profile 110 is used in the construction of the upper cross-beams 41a (figs. 14-19) and lower cross-beams 41b (figs. 20-26) of all the frames 42 both solid and hollow, by providing further workings to be made in order to make the production cycle complete.

In its use as an upper horizontal cross-beam 41a (fig. 14), the frame-profile 110 provides guides 58 inside which the elements 60 slide, part of the attachment system 66 for clamping the roof 44. The frame-profile 110 already provides seatings 62 for the positioning of sealing packings 64 between the frame 42 and the roof 44 above. The frame-profile 110 provides that in cooperation with the anchoring elements 66 of the roof 44 there are sealing packings 68 disposed in determinate positions with respect to the frame-profile 110 section with which said upper horizontal cross-beams 41 a are made.

The cross-beam 41 a is made by cutting the continuous extrusion profile twice at 90° and at a suitable distance, and by making only limited finishing workings (figs. 15, 16 and 18). On the element thus produced holes 70 are made, like an elongated eyelet, which allow the rainwater to flow off from said horizontal cross-beam 41a (functioning as a gutter) to the vertical uprights 40 (functioning as downspouts that take the water to the ground). The holes 70 are provided in particular on the terminal portions 72 of the upper horizontal cross-beam 41 a (fig. 17). On the terminal part 72 double holes 74 are also made, to define seatings for self-threading screws which clamp the vertical upright 40 to the upper horizontal cross-beam 41 a with an L-shaped clamping bracket, screwed to said two elements and inserted retracted into the respective frame-profiles 110 (fig.19).

The frame-profile 110, in its use as a lower horizontal cross-beam 41b has at the upper part a seating 76 for the buffer wall panel 43, and also supports 78 for contiguous floors 45 which may possibly rest on said frame 42 (fig. 20).

From figs. 21, 22 and 25 it can be seen how the cross-beam 41b is made by cutting the continuous extrusion profile at a suitable distance with cuts at 45°. The symmetrical cuts at 45° are visible better in fig. 23. On the element thus produced only limited further workings are made afterwards, consisting in holes for the two screws of the clamping brackets.

In figs. 24 and 26 two holes 80 are more visible on the edge portion 82 of the lower horizontal cross-beam 41b (part cut at 45°) which function as seatings for the self-threading screws which clamp the vertical upright 40 to the lower horizontal cross-beam 41 b with L-shaped clamping bracket, screwed to said two elements and inserted retracted into the frame-profiles 110 of both the vertical upright 40 and the cross-beam 41b.

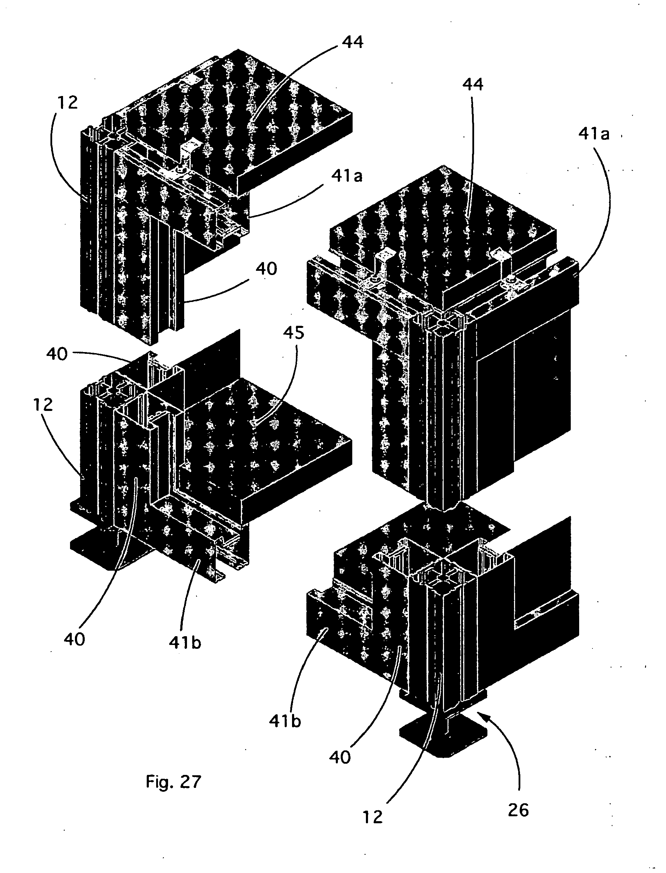

By means of the frame-profile 110 it is possible to make both bearing frames 42, in the version of the hollow or solid frame, completely, and also connections between frames 42 and the remaining components of the pre-fabricated system (fig. 27).

The four elements that make up each frame 42 (vertical uprights 40 and horizontal cross-beams 41 a, 41b) are formed using the frame-profile 110 according to the present invention. Fig. 27 also shows the positioning, with respect to a bearing frame 42 made according to the present invention, of the remaining components of the pre-fabricated system (columns 12, floors 45, roofs 44 etc.). It must be stressed that the complex and articulated shape of the frame-profile 110 allows it to be used in the different parts of the frame 42, having in each of them a different work mode: in the uprights 40, the frame-profile 110 not only has static functions but is also provided as a seating for the hook-holder bar 48 and the hooks 84 themselves, with which the frame 42 is connected to the columns 12. In the upper cross-beam 41 a, the frame-profile 110 also acts as a gutter and, as a support for the cover element or roof 44, is already equipped with the seating in which to position the sealing packing 64 of the roof and the guides 58 in which the clamping system 66 of the roof is anchored. In the lower cross-beam 41 b the frame-profile 110, apart from the connected static functions, also has the function of supporting the contiguous floors 45 resting on the same frame 42.

The combination of the frame 42 and the column 12 is clamped by inserting the clamping hooks 84 into the vertical uprights 40, as can be seen in the section of the vertical upright 40 in fig. 28.

The hook-bearing bar 48 (suitably holed with an eyelet in correspondence with the hooks 84) slides directly in the guides 46 which are already part of the frame-profile 110. In order to totally guarantee the perfect positioning of the clamping hook 84, the frame-profile 110 already provides the second sliding guide 52 for the terminal zone 85 of the hooks 84 (fig. 8). In the profile of the upright 40 the holes 86 must also be provided (three for every upright 40) in which to insert the removable Allen screw 88 which drives the hook 84. When the assembly operations are terminated, the holes 86 will then be closed with suitable pressure stoppers 90.

The insertion of the clamping hook 84 and its positioning with respect to the external bulk of the vertical upright 40 is achieved as shown in fig. 29. In fig. 29 it can also be seen how the relative Allen screw 88 can act in order to drive the clamping hook 84 between the bearing frame 42 and the column 12.

Figs. 30 and 31 show various solutions for using the frame-profile 110 as the upper cross-beam 41 a of the bearing frame 42.

In particular, figs. 30 and 31 show the positioning system of the cover element or roof 44 with respect to the upper cross-beam 41 a and the way it is clamped to the remaining structure 50.

Fig. 30 concerns the solution with the roof 44 in the edge position, when only one roof 44 rests on a bearing frame 42. The roof 44 has an edge profile which functions as a drip 92. The drip 92 is inserted directly inside the upper horizontal cross-beam 41a. In the clamping system 66 of the roof 44, the element 60 that has to be attached to the bearing frame 42 is modified according to the shape of the frame-profile 110; the element 60 of the attachment system 66 to the bearing frame 42, thus modified, can in this way clamp itself directly inside the guides 58 already present in the frame-profile 110.

Fig. 31 concerns the solution with the roof 44 in a central position, that is, when two roofs 44 rest on one bearing frame. In this solution too, the edge profile of the roof 44 functions as a drip 92.

The present invention also provides to attach two contiguous bearing frames 42 to the same pillar or bearing column 12. The position of the roof 44 is shown with respect to said component elements of the pre-fabricated system and it is therefore clear that hollows or notches 24 are needed, made on the top 11 of the pillar or bearing column 12 and described in detail in figs. 3, 4 and 5; given the co-planar nature of the cover structure or roof 44, just as the drip 92 is inserted inside the upper cross-beam 41a of the frame 42 (functioning as a gutter), in the same way the drip 92 has to be able to be inserted in the notches 24 inside the pillar or bearing column 12 (upper hollows), the section of which (column-profile 10) allows the rainwater to flow away to the ground.

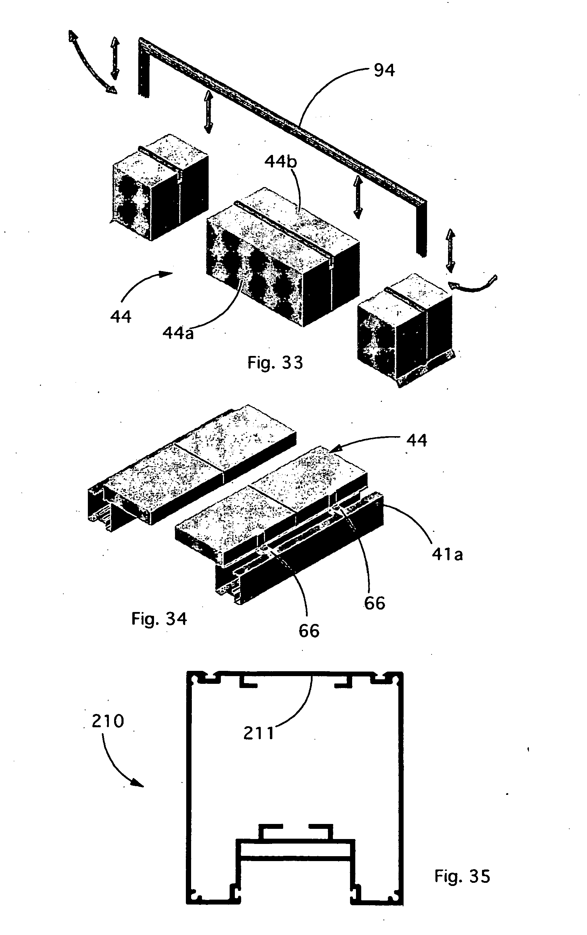

The present invention can also be used with a bipartite cover element or roof 44 with a connected system of packings 94 (fig. 33).

The precision ensured to all the components of the pre-fabricated system by the introduction of the present invention insofar as it is disclosed by the international patent application PCT/EP2006/050634 in the name of the present Applicants allows to produce a bipartite roof as an alternative to the monolithic roof as per the application PCT/EP2006/050634. The packing 94, in this case, is interposed between two half-roofs 44a and 44b: the packing 94 will work under compression at the moment the hooks are tightened, which are introduced inside the panels which make up the structure of the roof 44.

In the case of the bipartite roof too (fig. 34), in order to attach it to the bearing structure 42 below, the same types of clamping systems 66 will be used as those provided for the monolithic roof system. The clamping systems 66, shown in figs. 30, 31 and 32, have been modified with respect to what is disclosed in the application PCT/EP2006/050634 in order to adapt to the new frame-profiles 110 used for the bearing frames 42 of the structure 50.

Fig. 35 shows an alternative variant for the frame-profile, indicated for convenience by the reference number 210. The variant has a new type of extruded element, which is also the object of the present invention and which maintains the technical and functional characteristics of the basic frame-profile 110 intact, but which differs therefrom in that it has a closed section rather than an open section, thanks to a closing portion 211. The advantages of this variant solution with respect to the basic solution, are the greater resistance to torsion of the profile and the greater ease of working during the extrusion process.

The alternative variant profile 210 can replace the profile 110 in the construction of the vertical uprights 40 of the frames 42; however, if this type of profile is replaced, an additional working must be carried out in the factory, consisting of the holing of the profile in order to create eyelets for the passage of the clamping hooks 84 in order to clamp the frames 42 to the bearing columns 12. The same profile 210 can also be used for the construction of the lower horizontal cross-beam 4 1 b of the bearing frames 42. In this case, as an additional working, the profile must be holed in correspondence with the vertical uprights 40, in order to allow the rainwater to flow to the ground which from the collecting gutter (upper cross-beam 41a) has been channeled into the downspouts (vertical uprights 40).

Fig. 37 shows the application of the profiles 10, 110, 210 according to the present invention and the bearing columns 12 and the bearing frames 42 made with them, in order to make a modular structure 50 of the housing type based on the international patent application PCT/EP2006/050634 in the name of the present Applicants.

In this way, the constructional problems encountered in making the whole pre-fabricated structure are solved, and the final result of the process is an artifact that, while being based on the application PCT/EP2006/050634, is a significant improvement thereon.

Apart from the technical-functional advantages given by the introduction of the present invention into the previous application PCT/EP2006/050634, it must be noted that, in this integrating and improving operation, the purpose is achieved of being able to make the artifact on an industrial scale (no longer artisan), with significantly lower production costs and with an enormous expansion of the productive industrial capacity given the same work force used in the factory.

To summarize, the invention is based mainly on the design of new extrusion profiles 10, 110, 210, their application in designs of the type described in the previous application PCT/EP2006/050634 and the connected modifications of the remaining artifacts of said modular pre-fabrication system, modifications specifically connected with the introduction of the new technologies according to the present invention. The relative detailed executive plans of the typical sections of the new extruded pieces are an integrating part of the present invention and allow to create the corresponding molds for their production, with the extrusion technique. The design of the typical sections takes into account not only the specific technical and functional characteristics which the profile has to satisfy, but also the specific limitations and particular strategies required by the extrusion technique. The new extrusion molds, created on the basis of the indications according to the present invention, can be entrusted to any industry specialized in the production of extruded metal profiles and can be mounted directly on the existing machinery, thus making possible a controlled and calibrated production, even in large quantities, like those required in an industrial production process, as is made possible by adopting the innovative technologies according to the present invention.

It is clear that modifications and/or additions of parts may be made to the extruded profiles as described heretofore, without departing from the field and scope of the present invention, as defined by the appended claims.

It is also clear that, although the present invention has been described with reference to some specific examples, a person of skill in the art shall certainly be able to achieve many other equivalent forms of extruded profiles, having the characteristics as set forth in the claims and hence all coming within the field of protection defined thereby.

## Claims

1. Method to assemble a modular structure (50) of the housing type, comprising at least bearing columns (12) and wall frames (42) to support walls (43), said wall frames (42), formed by vertical uprights (40), upper horizontal cross-beams (41a) and lower horizontal cross-beams (41b), **characterized in that** it provides to use at least two types of complex-section extruded profiles (10, 110, 210), respectively a first profile (10) and at least a second profile (110, 210), in which:
- the bearing columns (12) are defined by the first, or column, profiles (10) which include first seatings (13) to house first connection means (16), and
- the vertical uprights (40), upper cross-beams (4 1 a) and lower cross-beams (4 1 b) are defined by the second, or frame, profiles (110, 210) which include both second seatings (46, 52) to house second connection means (84) mating with the first connection means (16), and also third seatings (76) to house the walls (43), and **in that** it also provides the following steps:
- a step in which the walls (43) are inserted into the third seatings (76) of the vertical uprights (40), of the upper cross-beams (41a) and of the lower cross-beams (41b), and the vertical uprights (40), the upper cross-beams (41a) and the lower cross-beams (41b) are connected with each other in order to define the wall frames (42);
- a step in which, by means of the reciprocal coupling of the first connection means (16) associated with the bearing columns (12) with the second connection means (84) associated with the vertical uprights (40), upper cross-beams (41 a) and lower cross-beams (41b), the wall frames (42) are connected to the bearing columns (12).

2. Method as in claim 1, **characterized in that** it provides to use each of the first profile (10) of a generally square shape and having the same characteristics on all four sides, so as to allow the wall frames (42) to be attached without distinction on each of the four sides of the profile (10), without fixed or pre-determined positions, and **in that** it provides to use the first profiles (10) having symmetrically on each of its four sides suitable free spaces (14) to allow the movement of clamping hooks (84) of the wall frames (42) to the bearing column (12).

3. Method as in any claim hereinbefore, **characterized in that** it provides to use having notches (24) to be cut at the top (11) of the bearing column (12) so as to allow the insertion therein of the profile of a roof (44).

4. Method as in any claim hereinbefore, **characterized in that** when the second profiles (110) are used as a vertical upright (40), the second profiles (110) are provided with guides (46) inside which a bar (48) slides, bearing clamping hooks (84), and also provides second guides (52) to further clamp the hooks.

5. Method as in any claim hereinbefore, **characterized in that** when the second profiles (110) are used as an upper cross-beam (41a), the second profiles (110) are provided with guides (58) inside which elements (60) slide, part of an attachment system (66) for the clamping system of a roof (44) and with seatings (62) for positioning sealing packings (64, 68) between the wall frame (42) and the roof (44) above.

6. Method as in any claim hereinbefore, **characterized in that** when the second profiles (110) are used as an upper cross-beam (41a), the second profiles (110) are made directly from the continuous extrusion profile and by making thereon a cut at 90° and a second cut again at 90°, at a suitable distance between them.

7. Method as in any claim hereinbefore, **characterized in that** when the second profiles (110) are used as an upper cross-beam (41a), the second profiles (110) are provided with, as further workings to be made on the extruded profile, holes as an elongated eyelet (70) which allow the rainwater to flow from said upper cross-beam (41a), functioning as a gutter, to the vertical uprights (40), functioning as downspouts for the rainwater to be dispersed to the ground, and that further holes (74) are made in order to make seatings for self-threading screws which clamp the vertical upright (40) to the upper cross-beam (41a), with an L-shaped clamping bracket.

8. Method as in any claim hereinbefore, **characterized in that** when the second profiles (110) are used, both as a vertical upright (40) and also as a lower cross-beam (41b) and/or as an upper cross-beam (41a), the second profiles (110) are provided with a seating (76) in which buffer panels are fitted, which make each of the walls (43).

9. Method as in any claim hereinbefore, **characterized in that** when the second profiles (110) are used as a lower cross-beam (41b), the second profiles (110) are provided with supports (78) for contiguous floors (45) that may possibly rest on the same wall frame (42).

10. Method as in any claim hereinbefore, **characterized in that** when the second profiles (110) are used as a lower cross-beam (41b), the second profiles (110) are made directly from the continuous extrusion profile and by making thereon a cut at +45° and a second cut again at -45° at a suitable distance from each other, and when the second profiles (110) are used as a lower cross-beam (41b), the second profiles (110) are provided, as further workings to be made on the extruded profile, with further holes (80) in order to make seatings for self-threading screws which clamp the vertical upright (40) to the lower cross-beam (41b), with an L-shaped clamping bracket.

11. Method as in any claim hereinbefore, **characterized in that** when the second profiles (110) are used as an upper cross-beam (41a), the second profiles (110) are allowed to clamp a roof (44), both in the case of clamping a single roof (44) and also in the case of simultaneously clamping two contiguous roofs (44a, 44b), with a mechanical system, in such a manner that the clamping element that grips against the wall frame (42) can be fitted without distinction in a guide (58) provided in each of the second profiles (110).

12. Method as in any claim hereinbefore, **characterized in that** it provides to use a cover system (44) provided with a drip (92), which cover system (44) enters inside the first profile (10) allowing the rain water to flow inside the first profile (10) and then to be dispersed to the ground.

13. Modular structure of the housing type, comprising at least bearing columns (12) and wall frames (42) to support walls (43), said wall frames (42) formed by vertical uprights (40), upper horizontal cross-beams (41a) and lower horizontal cross-beams (41b), said structure comprising at least two types of profiles (10, 110, 210), respectively, first (10) and second (110, 210), in which:
- the bearing columns (12) are defined by first complex-section extruded profiles, or column profiles (10) which include first seatings (13) to house first connection means (16);
- the vertical uprights (40), upper cross-beams (41a) and lower cross-beams (41b) are connected with each other in order to define the wall frames (42) and are defined by second complex-section extruded profiles or frame profiles (110, 210) which include both second seatings (46, 52) to house second connection means (84) mating with the first connection means (16), and also third seatings (76) in which the walls (43) are able to be inserted; and
- means of the reciprocal coupling of the first connection means (16) associated with the bearing columns (12) with the second connection means (84) associated with the vertical uprights (40), upper cross-beams (41a) and lower cross-beams (41b) are provided to connect the wall frames (42) to the bearing columns (12).

14. System of profiles to assemble a modular structure (50) of the housing type, comprising at least bearing columns (12) and wall frames (42) to support walls (43), said wall frames (42) formed by vertical uprights (40), upper horizontal cross-beams (41a) and lower horizontal cross-beams (41b), said system comprising at least two types of profiles (10, 110, 210), respectively, first (10) and second (110, 210), in which:
- the bearing columns (12) are defined by first complex-section extruded profiles, or column profiles (10) which include first seatings (13) to house first connection means (16), and
- the vertical uprights (40), upper cross-beams (41a) and lower cross-beams (41b) are defined by second complex-section extruded profiles or frame profiles (110, 210) which include both second seatings (46, 52) to house second connection means (84) mating with the first connection means (16), and also third seatings (76) to house the walls (43);
said system also comprising
- walls (43) inserted into the third seatings (76) of the vertical uprights (40), of the upper cross-beams (41a) and of the lower cross-beams (41b); the vertical uprights (40), the upper cross-beams (41 a) and the lower cross-beams (41b) being connected with each other in order to define the wall frames (42); and
- the wall frames (42) being connected to the bearing columns (12), by means of the reciprocal coupling of the first connection means (16) associated with the bearing columns (12) with the second connection means (84) associated with the vertical uprights (40), upper cross-beams (4 1 a) and lower cross-beams (41b).

## Patentansprüche

1. Verfahren zum Montieren einer modularen Struktur (50) vom Gehäusetyp, die mindestens Tragsäulen (12) und Wandrahmen (42) zum Stützen von Wänden (43) aufweist, wobei die Wandrahmen (42) durch vertikale Ständer (40), obere horizontale Querholme (41a) und untere horizontale Querholme (41b) gebildet werden,
**dadurch gekennzeichnet, dass** das Verfahren die Verwendung von mindestens zwei Arten von extrudierten Profilen (10, 110, 210) mit komplexem Querschnitt - eines ersten Profils (10) und mindestens eines zweiten Profils (110, 210) - vorsieht, wobei:
- die Tragsäulen (12) durch die ersten, oder Säulen-, Profile (10) definiert werden, die erste Aufnahmen (13) enthalten, um erste Verbindungsmittel (16) aufzunehmen, und
- die vertikalen Ständer (40), die oberen Querholme (41a) und die unteren Querholme (41b) durch die zweiten, oder Rahmen-, Profile (110, 210) definiert werden, die sowohl zweite Aufnahmen (46, 52) zum Aufnehmen zweiter Verbindungsmittel (84), die mit den ersten Verbindungsmitteln (16) zusammenpassen, als auch dritte Aufnahmen (76) zum Aufnehmen der Wände (43) aufweisen,
und **dadurch gekennzeichnet, dass** es des Weiteren die folgenden Schritte aufweist:
- einen Schritt, bei dem die Wände (43) in die dritten Aufnahmen (76) der vertikalen Ständer (40), der oberen Querholme (41a) und der unteren Querholme (41b) eingesetzt werden, und die vertikalen Ständer (40), die oberen Querholme (41a) und die unteren Querholme (41b) miteinander verbunden werden, um die Wandrahmen (42) zu definieren; und
- einen Schritt, bei dem, mittels der wechselseitigen Kopplung der ersten Verbindungsmittel (16), die den Tragsäulen (12) zugeordnet sind, mit den zweiten Verbindungsmitteln (84), die den vertikalen Ständern (40), den oberen Querholmen (41a) und den unteren Querholmen (41b) zugeordnet sind, die Wandrahmen (42) mit den Tragsäulen (12) verbunden werden.

2. Verfahren nach Anspruch 1, **dadurch gekennzeichnet, dass** es die Verwendung jedes der ersten Profile (10) vorsieht, die eine allgemein quadratische Form haben und auf allen vier Seiten die gleichen Eigenschaften aufweisen, so dass die Wandrahmen (42) unterschiedslos auf allen vier Seiten des Profils (10), ohne feste oder zuvor festgelegte Positionen, befestigt werden können, und dass es die Verwendung der ersten Profile (10) vorsieht, die symmetrisch auf jeder ihrer vier Seiten geeignete freie Räume (14) aufweisen, um die Bewegung von Klemmhaken (84) der Wandrahmen (42) zu der Tragsäule (12) zu gestatten.

3. Verfahren nach einem der vorangehenden Ansprüche, **dadurch gekennzeichnet, dass** es die Verwendung von Aussparungen (24) vorsieht, die in die Oberseite (11) der Tragsäule (12) zu schneiden sind, so dass das Profil eines Daches (44) darin eingesetzt werden kann.

4. Verfahren nach einem der vorangehenden Ansprüche, **dadurch gekennzeichnet, dass**, wenn die zweiten Profile (110) als ein vertikaler Ständer (40) verwendet werden, die zweiten Profile (110) mit Führungen (46) versehen sind, in denen ein Stab (48) gleitet, der Klemmhaken (84) trägt, und das des Weiteren zweite Führungen (52) vorgesehen werden, um die Haken zusätzlich festzuklemmen.

5. Verfahren nach einem der vorangehenden Ansprüche, **dadurch gekennzeichnet, dass**, wenn die zweiten Profile (110) als ein oberer Querholm (41a) verwendet werden, die zweiten Profile (110) mit Führungen (58), in denen Elemente (60) gleiten, versehen sind und mit einem Teil eines Befestigungssystems (66) für das Klemmsystem eines Daches (44) und mit Aufnahmen (62) zum Positionieren von Dichtungspackungen (64, 68) zwischen dem Wandrahmen (42) und dem Dach (44) darüber.

6. Verfahren nach einem der vorangehenden Ansprüche, **dadurch gekennzeichnet, dass**, wenn die zweiten Profile (110) als ein oberer Querholm (41a) verwendet werden, die zweiten Profile (110) direkt aus dem kontinuierlichen Extrusionsprofil, und durch Anfertigen eines Schnittes bei 90° und eines zweiten Schnittes wieder bei 90° - in einem zweckmäßigen Abstand zueinander - hergestellt werden.

7. Verfahren nach einem der vorangehenden Ansprüche, **dadurch gekennzeichnet, dass**, wenn die zweiten Profile (110) als ein oberer Querholm (41a) verwendet werden, die zweiten Profile (110) - als ein weiterer Arbeitsschritt, der an dem extrudierten Profil auszuführen ist - mit in Langlochform (70) ausgebildeten Löchern versehen werden, die das Abfließen von Regenwasser aus dem oberen Querholm (41a), der als Regenrinne fungiert, zu den vertikalen Ständern (40), die als Fallrohre für das zum Boden abzuleitende Regenwasser fungieren, gestatten, und dass weitere Löcher (74) ausgebildet werden, um Aufnahmen für selbstschneidende Schrauben herzustellen, die den vertikalen Ständer (40) mit einer L-förmigen Klemmschelle an den oberen Querholm (41a) klemmen.

8. Verfahren nach einem der vorangehenden Ansprüche, **dadurch gekennzeichnet, dass**, wenn die zweiten Profile (110) sowohl als ein vertikaler Ständer (40) als auch als ein unterer Querholm (41b) und/oder als ein oberer Querholm (41a) verwendet werden, die zweiten Profile (110) mit einer Aufnahme (76) versehen sind, in die Pufferpaneele eingesetzt werden, welche die einzelnen Wände (43) bilden.

9. Verfahren nach einem der vorangehenden Ansprüche, **dadurch gekennzeichnet, dass**, wenn die zweiten Profile (110) als ein unterer Querholm (41b) verwendet werden, die zweiten Profile (110) mit Stützen (78) für angrenzende Fußböden (45) versehen werden, die möglicherweise an demselben Wandrahmen (42) anliegen.

10. Verfahren nach einem der vorangehenden Ansprüche, **dadurch gekennzeichnet, dass**, wenn die zweiten Profile (110) als ein unterer Querholm (41b) verwendet werden, die zweiten Profile (110) direkt aus dem kontinuierlichen Extrusionsprofil, und durch Anfertigen eines Schnittes bei +45° und eines zweiten Schnittes ebenfalls bei -45° - in einem zweckmäßigen Abstand zueinander - hergestellt werden, und wenn die zweiten Profile (110) als ein unterer Querholm (41b) verwendet werden, die zweiten Profile (110) - als ein weiterer Arbeitsschritt, der an dem extrudierten Profil auszuführen ist - mit weiteren Löchern (80) versehen werden, um Aufnahmen für selbstschneidende Schrauben herzustellen, die den vertikalen Ständer (40) mit einer L-förmigen Klemmschelle an den unteren Querholm (41b) klemmen.

11. Verfahren nach einem der vorangehenden Ansprüche, **dadurch gekennzeichnet, dass**, wenn die zweiten Profile (110) als ein oberer Querholm (41a) verwendet werden, es den zweiten Profilen (110) möglich ist, ein Dach (44) - sowohl im Fall des Klemmens eines einzelnen Daches (44) als auch im Fall des gleichzeitigen Klemmens zweier angrenzender Dächer (44a, 44b) - mit einem mechanischen System in einer solchen Weise festzuklemmen, dass das Klemmelement, das den Wandrahmen (42) ergreift, unterschiedslos in einer Führung (58) montiert werden kann, die in jedem der zweiten Profile (110) vorgesehen ist.

12. Verfahren nach einem der vorangehenden Ansprüche, **dadurch gekennzeichnet, dass** es die Verwendung eines Abdecksystems (44) vorsieht, das mit einer Masserablaufrinne (92) versehen ist, wobei das Abdecksystem (44) in das erste Profil (10) hinein reicht, wodurch das Regenwasser im Inneren des ersten Profils (10) fließen und anschließend zum Boden abgeleitet werden kann.

13. Modulare Struktur vom Gehäusetyp, die mindestens Tragsäulen (12) und Wandrahmen (42) zum Stützen von Wänden (43) aufweist, wobei die Wandrahmen (42) durch vertikale Ständer (40), obere horizontale Querholme (41a) und untere horizontale Querholme (41b) gebildet werden, wobei die Struktur mindestens zwei Arten von Profilen (10, 110, 210) aufweist - erste (10) und zweite (110, 210) Profile -, wobei
- die Tragsäulen (12) durch erste extrudierte Profile mit komplexem Querschnitt, oder Säulenprofile (10), definiert werden, die erste Aufnahmen (13) zum Aufnehmen erster Verbindungsmittel (16) enthalten;
- die vertikalen Ständer (40), die oberen Querholme (41a) und die unteren Querholme (41b) miteinander verbunden werden, um die Wandrahmen (42) zu definieren, und durch zweite extrudierte Profile mit komplexem Querschnitt, oder Rahmenprofile (110, 210), definiert werden, die sowohl zweite Aufnahmen (46, 52) zum Aufnehmen zweiter Verbindungsmittel (84), die mit den ersten Verbindungsmitteln (16) zusammenpassen, als auch dritte Aufnahmen (76), in die die Wände (43) eingesetzt werden können, aufweisen, und
- Mittel zum wechselseitigen Koppeln der ersten Verbindungsmittel (16), die den Tragsäulen (12) zugeordnet sind, mit den zweiten Verbindungsmitteln (84), die den vertikalen Ständern (40), den oberen Querholmen (41a) und den unteren Querholmen (41b) zugeordnet sind, zum Verbinden der Wandrahmen (42) mit den Tragsäulen (12) vorgesehen sind.

14. System aus Profilen zum Montieren einer modularen Struktur (50) vom Gehäusetyp, die mindestens Tragsäulen (12) und Wandrahmen (42) zum Stützen von Wänden (43) aufweist, wobei die Wandrahmen (42) durch vertikale Ständer (40), obere horizontale Querholme (41a) und untere horizontale Querholme (41b) gebildet werden, wobei das System mindestens zwei Arten von Profilen (10, 110, 210) - erste (10) und zweite Profile (110, 210) - aufweist, wobei
- die Tragsäulen (12) durch erste extrudierte Profile mit komplexem Querschnitt, oder Saulenprofile (10), definiert werden, die erste Aufnahmen (13) zum Aufnehmen erster Verbindungsmittel (16) enthalten;
- die vertikalen Ständer (40), die oberen Querholme (41a) und die unteren Querholme (41b) durch zweite extrudierte Profile mit komplexem Querschnitt, oder Rahmenprofile (110, 210), definiert werden, die sowohl zweite Aufnahmen (46, 52) zum Aufnehmen zweiter Verbindungsmittel (84), die mit den ersten Verbindungsmitteln (16) zusammenpassen, als auch dritte Aufnahmen (76) zum Aufnehmen der Wände (43) enthalten,
wobei das System außerdem aufweist:
- Wände (43), die in die dritten Aufnahmen (76) der vertikalen Ständer (40), der oberen Querholme (41a) und der unteren Querholme (41b) eingesetzt sind; wobei die vertikalen Ständer (40), die oberen Querholme (41a) und die unteren Querholme (41b) miteinander verbunden sind, um die Wandrahmen (42) zu definieren; und
- wobei die Wandrahmen (42), die mittels der wechselseitigen Kopplung der ersten Verbindungsmittel (16), die den Tragsäulen (12) zugeordnet sind, mit den zweiten Verbindungsmitteln (84), die den vertikalen Ständern (40), den oberen Querholmen (41a) und den unteren Querholmen (41b) zugeordnet sind, mit den Tragsäulen (12) verbunden sind.

## Revendications

1. Procédé d'assemblage d'une structure modulaire (50) du type logement, comprenant au moins des poteaux porteurs (12) et des ossatures murales (42) destinés à soutenir des murs (43), lesdites ossatures murales (42) étant formées par des montants verticaux (40), des traverses horizontales supérieures (41a) et des traverses horizontales inférieures (41b), **caractérisé en ce qu'**il prévoit d'utiliser au moins deux types de profils extrudés à section complexe (10, 110, 210), respectivement un premier profil (10) et au moins un second profil (110, 210), procédé dans lequel :
- les poteaux porteurs (12) sont définis par les premiers profils (10), ou poteaux, qui comprennent des premiers sièges (13) destinés à recevoir des premiers moyens d'assemblage (16), et
- les montants verticaux (40), les traverses supérieures (41a) et les traverses inférieures (41b) sont définis par les seconds profils (110, 210), ou ossatures, qui comprennent à la fois des deuxièmes sièges (46, 52) destinés à recevoir des seconds moyens d'assemblage (84) appariés aux premiers moyens d'assemblage (16), et des troisièmes sièges (76) destinés à recevoir les murs (43), procédé **caractérisé en ce qu'**il prévoit aussi les étapes suivantes :
- une étape consistant à introduire les murs (43) dans les troisièmes sièges (76) des montants verticaux (40), des traverses supérieures (41a) et des traverses inférieures (41b) ; les montants verticaux (40), les traverses supérieures (41a) et les traverses inférieures (41b) étant assemblés entre eux de manière à définir les ossatures murales (42) ;
- une étape consistant à assembler les ossatures murales (42) aux poteaux porteurs (12) en accouplant les premiers moyens d'assemblage (16) associés aux poteaux porteurs (12) avec les seconds moyens d'assemblage (84) associés aux montants verticaux (40), aux traverses supérieures (41a) et aux traverses inférieures (41b).

2. Procédé selon la revendication 1, **caractérisé en ce qu'**il prévoit d'utiliser chacun des premiers profils (10) de forme généralement carrée et ayant les mêmes caractéristiques des quatre côtés, pour permettre d'attacher les ossatures murales (42) indifféremment sur chacun des quatre côtés du profil (10), sans position fixe ou prédéfinie, et **en ce qu'**il prévoit d'utiliser les premiers profils (10), dotés symétriquement sur leurs quatre côtés d'espaces libres appropriés (14), pour permettre le mouvement de crochets de fixation (84) des ossatures murales (42) aux poteaux porteurs (12).

3. Procédé selon l'une quelconque des revendications précédentes, **caractérisé en ce qu'**il prévoit d'utiliser des encoches (24) découpées au sommet (11) des poteaux porteurs (12) pour permettre d'y introduire le profil d'un toit (44).

4. Procédé selon l'une quelconque des revendications précédentes, **caractérisé en ce que** lorsque les seconds profils (110) sont utilisés comme montants verticaux (40), ils sont munis de guides (46) à l'intérieur desquels coulisse une barre (48) portant des crochets de fixation (84), ainsi que de seconds guides (52) destinés à fixer mieux encore les crochets.

5. Procédé selon l'une quelconque des revendications précédentes, **caractérisé en ce que** lorsque les seconds profils (110) sont utilisés comme traverses supérieures (41a), ils sont munis de guides (58) à l'intérieur desquels coulissent des éléments (60) faisant partie d'un système d'attache (66) pour le système de fixation d'un toit (44) et dotés de sièges (62) destinés à placer des garnitures d'étanchéité (64, 68) entre l'ossature murale (42) et le toit (44) situé au-dessus.

6. Procédé selon l'une quelconque des revendications précédentes, **caractérisé en ce que** lorsque les seconds profils (110) sont utilisés comme traverses supérieures (41a), ils sont fabriqués directement par extrusion continue et en y pratiquant une découpe à 90°, suivie d'une seconde découpe à 90° également, séparées d'une distance appropriée.

7. Procédé selon l'une quelconque des revendications précédentes, **caractérisé en ce que** lorsque les seconds profils (110) sont utilisés comme traverses supérieures (41a), ils sont munis, par travail ultérieur du profil extrudé, de trous en forme d'ceillet oblong (70) qui permettent aux eaux pluviales de s'écouler depuis ladite traverse supérieure (41a), jouant le rôle de gouttière, jusqu'aux montants verticaux (40), jouant le rôle de tuyau de descente afin de disperser les eaux pluviales au sol, et **caractérisé en ce que** des trous supplémentaires (74) sont ménagés afin de créer des sièges destinés à des vis auto-taraudeuses qui fixent le montant vertical (40) à la traverse supérieure (41a) au moyen d'un étrier de fixation en L.

8. Procédé selon l'une quelconque des revendications précédentes, **caractérisé en ce que** lorsque les seconds profils (110) sont utilisés tant comme montants verticaux (40) que comme traverses inférieures (41b) et/ou traverses supérieures (41a), ils sont munis d'un siège (76) dans lequel sont installés des panneaux de remplissage qui constituent chacun des murs (43).

9. Procédé selon l'une quelconque des revendications précédentes, **caractérisé en ce que** lorsque les seconds profils (110) sont utilisés comme traverses inférieures (41b), ils sont munis de supports (78) pour planchers contigus (45) qui peuvent éventuellement reposer sur la même ossature murale (42).

10. Procédé selon l'une quelconque des revendications précédentes, **caractérisé en ce que** lorsque les seconds profils (110) sont utilisés comme traverses inférieures (41b), ils sont fabriqués directement par extrusion continue, en y pratiquant une découpe à +45° et une seconde découpe à -45° séparées d'une distance appropriée, et lorsque les seconds profils (110) sont utilisés comme traverses inférieures (41b), ils sont munis, par travail ultérieur du profil extrudé, de trous supplémentaires (80) destinés à créer des sièges pour des vis auto-taraudeuses qui fixent le montant vertical (40) à la traverse inférieure (41a) au moyen d'un étrier de fixation en L.

11. Procédé selon l'une quelconque des revendications précédentes, **caractérisé en ce que** lorsque les seconds profils (110) sont utilisés comme traverses supérieures (41a), ils permettent de fixer un toit (44), qu'il s'agisse de fixer un toit unique (44) ou de fixer simultanément deux toits contigus (44a, 44b), à l'aide d'un système mécanique, de sorte que l'élément de fixation qui s'accroche à l'ossature murale (42) puisse être installé indifféremment dans un guide (58) ménagé dans chacun des seconds profils (110).

12. Procédé selon l'une quelconque des revendications précédentes, **caractérisé en ce qu'**il prévoit d'utiliser un système de couverture (44) muni d'un larmier (92), lequel système de couverture (44) rentre dans le premier profil (10) pour permettre aux eaux pluviales de s'y écouler et de se disperser au sol.

13. Structure modulaire du type logement, comprenant au moins des poteaux porteurs (12) et des ossatures murales (42) destinés à soutenir les murs (43), lesdites ossatures murales (42) étant formées par des montants verticaux (40), des traverses horizontales supérieures (41a) et des traverses horizontales inférieures (41b), ladite structure comprenant au moins deux types de profils (10, 110, 210), respectivement un premier profil (10) et un second profil (110, 210), dans laquelle :
- les poteaux porteurs (12) sont définis par des profils extrudés à section complexe, ou profils de poteaux (10), qui comprennent des premiers sièges (13) destinés à recevoir des premiers moyens d'assemblage (16) ; et
- les montants verticaux (40), les traverses supérieures (41a) et les traverses inférieures (41b) sont assemblés entre eux de manière à définir les ossatures murales (42) et sont définis par des seconds profils extrudés à section complexe, ou profils d'ossature (110, 210), qui comprennent à la fois des deuxièmes sièges (46, 52) destinés à recevoir des seconds moyens d'assemblage (84) appariés premiers moyens d'assemblage (16), et des troisièmes sièges (76) dans lesquels peuvent être introduits les murs (43) ; et
- des moyens destinés à accoupler les premiers moyens d'assemblage (16) associés aux poteaux porteurs (12) avec les seconds moyens d'assemblage (84) associé aux montants verticaux (40), aux traverses supérieures (41a) et aux traverses inférieures (41b) sont prévus pour assembler les ossatures murales (42) aux poteaux porteurs (12).

14. Système de profils pour assembler une structure modulaire (50) du type logement, comprenant au moins des poteaux porteurs (12) et des ossatures murales (42) destinés à soutenir des murs (43), lesdites ossatures murales (42) étant formées par des montants verticaux (40), des traverses horizontales supérieures (41a) et des traverses horizontales inférieures (41b), ledit système comprenant au moins deux types de profils (10, 110, 210), respectivement un premier profil (10) et un second profil (110, 210), système dans lequel :
- les poteaux porteurs (12) sont définis par des profils extrudés à section complexe, ou profils de poteaux (10), qui comprennent des premiers sièges (13) destinés à recevoir des premiers moyens d'assemblage (16) ; et
- les montants verticaux (40), les traverses supérieures (41a) et les traverses inférieures (41b) sont définis par des seconds profils extrudés à section complexe, ou profils d'ossature (110, 210), qui comprennent à la fois des deuxièmes sièges (46, 52) destinés à recevoir des seconds moyens d'assemblage (84) appariés aux premiers moyens d'assemblage (16), et des troisièmes sièges (76) destinés à recevoir les murs (43) ; ledit système comprenant aussi :
- des murs (43) introduits dans les troisièmes sièges (76) des montants verticaux (40), des traverses supérieures (41a) et des traverses inférieures (41b) ; les montants verticaux (40), les traverses supérieures (41a) et les traverses inférieures (41b) étant assemblés entre eux de manière à définir les ossatures murales (42) ; et
- les ossatures murales (42) étant assemblées aux poteaux porteurs (12) en accouplant les premiers moyens d'assemblage (16) associés aux poteaux porteurs (12) avec les seconds moyens d'assemblage (84) associé aux montants verticaux (40), aux traverses supérieures (41a) et aux traverses inférieures (41b).
